# EUROPEAN PATENT APPLICATION

(11) **EP 2 228 398 A1**
(43) Date of publication of application: **15.09.2010**
(21) Application number: 10250432.1
(22) Date of filing: 09.03.2010
(51) Int. Cl.: C08G 18/10

(54) **Foam seal formulation**

(30) Priority: 10.03.2009 US 158874 P; 01.02.2010 US 697655
(71) Applicant: Tyco Healthcare Group LP, North Haven, CT 06473 (US)
(72) Inventor: Sung, Jason, North Branford, CT 06471 (US); Stellon, Gene A., Burlington, Ct 06013 (US); Necio, Caren L., Hamden, CT 06517 (US); Sendijarevic, Aisa, Troy, Michigan 48085 (US); Sendijarevic, Vahid, Troy, Michigan 48085 (US)
(74) Representative: Soames, Candida Jane

(57) **Abstract**

Molded polyurethane foams are provided which are useful as seals and have an ultimate elongation of at least about 300%. The foams may be formed from a first composition including a polyol, a chain extender, optional surfactants, catalysts, and blowing agents, in combination with a second composition including a polyol and an isocyanate.

## Description

### CROSS REFERENCE TO RELATED APPLICATION

The present application claims the benefit of and priority to U.S. Provisional Application Serial No. 61/158,874 filed on March 10, 2009, the entire contents of which are incorporated herein by reference.

### TECHNICAL FIELD

The present disclosure relates to molded polyurethanes having improved tensile properties. In embodiments, the molded polyurethane may be a foam.

### DESCRIPTION OF THE RELATED ART

Methods of making polyurethane foams are known. By selecting and adjusting the ratios of the components of the polyurethane and the preparation process, a myriad of polyurethanes with a wide variety of properties can be made.

Seals, including those utilized in medical devices, may require a high degree of elasticity in order to withstand the forces applied to the seal and to prevent leaks. In applications where polyurethane foams are used as seals, it is desirable to have good tensile properties, particularly ultimate elongation. Thus, polyurethane foam seals having improved tensile properties which resist tearing and breakage when subjected to handling and mechanical forces remain desirable.

### SUMMARY

Methods for forming polyurethane foams are described. In accordance with the present methods, at least one polyol and at least one chain extender are combined to form a first composition and at least one diisocyanate and at least one polyol are combined to form a second composition. The first and second compositions are then combined in a mold and cured to form a polyurethane foam.

A polyurethane foam thus formed by the present disclosure may have an ultimate elongation of from about 300% to about 1000%. The polyurethane foam may include a first composition having at least one polyol present in an amount from about 65% by weight to about 90% by weight of the first composition, at least one chain extender present in an amount of from about 1.0% by weight to about 4.0% by weight of the first composition, and optionally a surfactant, a blowing agent, and a catalyst. The polyurethane foam may also include a second composition having a diisocyanate present in an amount of from about 70% by weight to about 90% by weight of the second composition and a polyol present in an amount of from about 10% by weight to about 30% by weight of the second composition. The polyol of the first and second compositions may be the same or different.

### BRIEF DESCRIPTION OF THE DRAWINGS

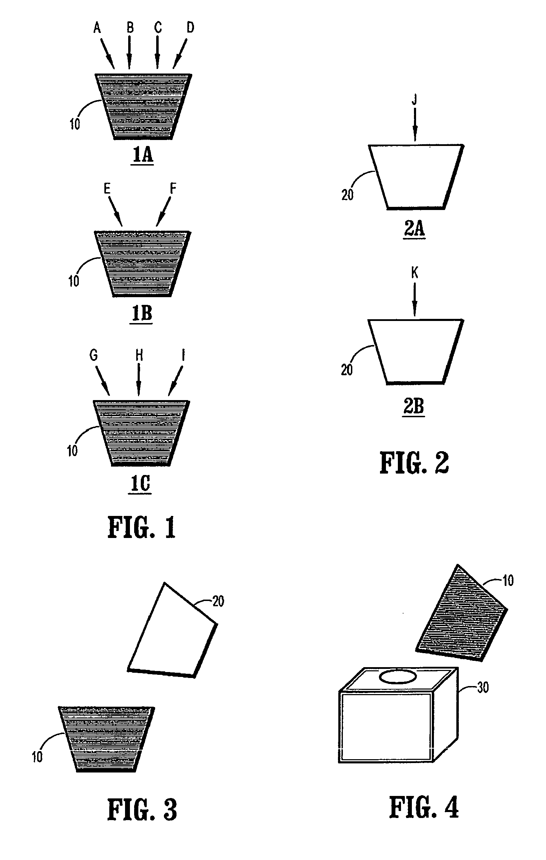

FIGS. 1-4 are schematic drawings of a process for making a molded polyurethane foam article in accordance with the present disclosure.

### DETAILED DESCRIPTION

The present disclosure provides methods for producing polyurethane foam articles, in embodiments seals. Polyurethane foam articles in accordance with the present disclosure may be prepared by reacting and molding a first composition with a second composition in amounts sufficient to provide increased tensile properties to the formed polyurethane article, while balancing other material properties. The processes for preparing and molding the polyurethane foam are described in greater detail below.

### The First Composition

The first composition of the present formulation includes at least one polyol component, a chain extender, and an optional surfactant, blowing agent, catalyst, and/or other additives. As used herein, a polyol possesses at least 2 hydroxyl groups, i.e., a difunctional polyol or a diol, or more than 2 hydroxyl groups, i.e., a multi-functional polyol, such as a triol. In embodiments, exemplary polyols may possess from about 2 to about 5 hydroxyl groups. In some embodiments, the first composition includes a difunctional polyol component.

In embodiments, the polyol component may be a polyether polyol, polyester polyol, polycarbonate polyol, hydrocarbon polyol, polysiloxane polyol, poly(ether-co-ester) polyol, poly(ether-co-carbonate) polyol, poly(ether-co-hydrocarbon) polyol, poly(ether-co-siloxane) polyol, poly(ester-co-carbonate) polyol, poly(ester-co-hydrocarbon) polyol, poly(ester-co-siloxane) polyol, poly(carbonate-co-hydrocarbon) polyol, poly(carbonate-co-siloxane) polyol, poly(hydrocarbon-co-siloxane) polyol, combinations thereof, and the like,

In embodiments, the polyol may be a polyether polyol. Polyether polyols contain a repeating ether linkage (-R-O-R-) and have two or more hydroxyl groups as terminal functional groups. Polyether polyols may be oligomers of, e.g., alkylene oxides such as ethylene oxide or propylene oxide, polymerized with glycols or polyhydric alcohols, the latter resulting in hydroxyl functionalities greater than 2. Specific examples of polyether polyols include polyoxyalkylene polyols such as polyethylene glycol, polypropylene glycol, polybutylene glycol, homopolymers and/or copolymers of the foregoing, combinations thereof, and the like.

The polyols need not be limited to those formed from a single monomeric unit. For example, the polyether polyol may be a copolymer of ethylene oxide and propylene oxide. Copolymers or copolyols may be formed utilizing any methods within the purview of those skilled in the art. For example, copolymers including polyoxyalkylene polyols may possess an adduct of at least one compound such as ethylene glycol, propylene glycol, diethylene glycol, dipropylene glycol, triethylene glycol, 2-ethylhexanediol-1,3,glycerin, 1,2,6-hexane triol, trimethylol propane, trimethylol ethane, tris(hydroxyphenyl)propane, triethanolamine, triisopropanolamine, ethylenediamine and ethanolamine, in combination with at least one compound such as ethylene oxide, propylene oxide and/or butylene oxide. In embodiments, mixtures, admixtures, and/or blends of polyols and copolyols may be used to form the first composition, and thus the resulting polyurethane of the present disclosure.

The molecular weight of the polyol may be varied. In embodiments, the polyol may have an average molecular weight of from about 1,000 to about 10,000, in embodiments, from about 2,000 to about 7.000, and in other embodiments, from about 4,000 to about 6,000. The functionality of the polyol may also varied. In embodiments the functionality may be from about 1.5 to about 8, in embodiments, from about 2 to about 4. For polyol blends and copolyols, the functionality may be from about 2 to about 3.

In embodiments, the polyol may be present in an amount to provide a controlled degree of cross-linking. The first composition of the present disclosure may thus contain polyols in an amount of from about 50% by weight to about 95% by weight of the composition, in embodiments, from about 65% by weight to about 90% by weight of the compositions, and in other embodiments, from about 70% by weight to about 85% by weight of the compositions. In embodiments, the polyols may form a soft segment of the first composition of the present disclosure.

In embodiments, at least one chain extender may be included in the first composition to provide a hard segment. Chain extenders may possess two or more functional groups, each of which contains active hydrogen atoms. These functional groups may be hydroxyl, primary amino, secondary amino, combinations thereof, and the like. The chain extenders may be aliphatic, cycloaliphatic, or aromatic. Exemplary chain extenders include diols, triols, tetraols, diamines, triamines, alkanol amines, aminoalcohols, combinations thereof, and the like. In embodiments, the chain extender may be an aliphatic diol having from about 2 to about 10 carbon atoms. In embodiments, the chain extender may be ethylene glycol, propylene glycol, 1,2-propane diol, 1,3-propane diol, 1,3-butane diol, 1,4-butane diol, 1,5-pentane diol, 1,6-hexanediol, diethylene glycol, triethylene glycol, dipropylene glycol, bisphenol A, hydrogenated bisphenol A, 1,4-cyclohexanediol, 1,4-bis(2-hydroxyethoxy)cyclohexane, 1,4-bis(2-hydroxyethoxy)benzene, N-methylethanolamine, N-methyliso-propylamine, 4-aminocyclohexanol, 1,2-diaminoethane, 1,3-diaminopropane, diethylenetriamine, toluene-2,4-diamine, toluene-1,6-diamine, combinations thereof, and the like.

The chain extender may be present in an amount of from about 0.5% by weight to about 5.0% by weight of the first composition, in embodiments, from about 1.0% by weight to about 4.0% by weight of the first composition, and in other embodiments, from about 1.5% by weight to about 3.5% by weight of the first composition.

Additives may optionally be included with the first composition. The inclusion of additives and/or process materials may provide a means for modifying the final properties of the molded polyurethane article. Examples of additives include, but are not limited to, colorants, fillers, processing aids, plasticizers, nucleating compounds, stabilizers, antioxidants, catalysts, mold release agents, flame retardants, reinforcing agents, combinations thereof, and the like. Other additives within the purview of those skilled in the art may also be added to the formulation. In embodiment, a colorant may be added for aesthetic enhancement.

In embodiments, a surfactant may also be added to the first composition. Suitable surfactants include non-ionic surfactants including polyether/silicone oil mixes, commercially available as TEGOSTAB BF-4133, BF-2370, B-8300, B-8305, and B-5055, all from Goldschmidt (Essen, Germany); silicone surfactants, including those commercially available as DC 5241 from Dow Coming (Midland, Mich.); and non-ionic organosilicones, such as the polydimethylsiloxane types available from Dow Coming (Midland, MI), Air Products (Allentown, PA), and General Electric (Waterford, NY).

Where present, a surfactant may be present in an amount of from about 0.05% by weight to about 2% by weight of the first composition, in embodiments, from about 0.1% by weight to about 1.5% by weight of the first composition, and in other embodiments, from about 0.2% by weight to about 1.0% by weight of the first composition.

In embodiments, a blowing agent may also be included with the first composition. Exemplary blowing agents include water, ethylene chloride, liquid carbon dioxide, and combinations thereof. In embodiments, physical blowing agents may be utilized, e.g., volatile organic chemicals such as hydrocarbons, ethanol and acetone, and various fluorocarbons and their more environmentally friendly replacements, such as hydrofluorocarbons, chlorofluorocarbon, and hydrochlorofluorocarbons. Moreover, combinations of blowing agents, such as water with a fluorocarbon, can be used. In embodiments, water may be used as the blowing agent.

Where present, a blowing agent may be present in an amount of from about 0.05% by weight to about 2% by weight of the first composition, in embodiments, from about 0.1 % by weight to about 1.5% by weight of the first composition, and in other embodiments, from about 0.2% by weight to about 1.0% by weight of the first composition.

In embodiments, at least one catalyst that promotes the formation of urethane groups may be added to the first composition. Catalysts may include tin catalysts such as tin octoate and dibutyltin dilaurate. Catalysts may also include amine catalysts such as methylene diamine, triethylamine, bis(dimethylaminoethyl)ether, N,N,N'-trimethylaminoethylethanolamine, bis(N,N-dimethylaminoethyl)ether, N,N'-dimethylpiperazine, pentamethyldipropyltriamine, 1,8-diazabicyclo(5,4,0)undecane-7, N-(N',N'-2-dimethylaminoethyl)morpholine, tri(dimethylaminemethyl)phenol, triethylene diamine, combinations thereof, and the like.

In embodiments, any of the above amine catalysts may be dissolved in a suitable solvent, such as butyl acetate, propylene glycol, dipropylene glycol, tripropylene glycol, propyl acetate, ethylene glycol, diethylene glycol, methyl isobutyl ketone, and derivatives and/or mixtures thereof. In embodiments, an amine catalyst and a tin catalyst may be simultaneously used.

The first composition may be prepared by a one-shot process by placing all the materials into a mixing vessel. Alternatively, the first composition may be prepared by adding the materials individually or in combinations into a mixing vessel. In embodiments, the polyols and chain extender may be placed in the mixing vessel and mixed before the addition of other materials. In embodiments, one material may be added at a time to the mixing vessel and mixed with the materials present in the mixing vessel until all desired materials are incorporated into the first composition.

The materials of the first composition may be mixed at a speed of from about 1000 rpm to about 5000 rpm, in embodiments, from about 1500 rpm to about 4500 rpm. The materials may be mixed for a period of time of from about 30 seconds to about 10 minutes, in embodiments from about 60 seconds to about 5 minutes, and in other embodiments from about 90 seconds to about 200 seconds. In embodiments where utilizing the components are added in separate steps, mixing may occur for a period of time of from about 10 seconds to about 60 seconds per material or batch of materials added. Mixing may occur at a temperature of from about 20°C to about 90°C, in embodiments, from about 30°C to about 80°C.

### The Second Composition

The second composition utilized in the polyurethane formulation of the present disclosure includes a prepolymer composition including polyols in combination with isocyanates. Any polyol described above as suitable for use in forming the first composition may be utilized as a polyol in the second composition. In some embodiments, a polyether polyol may be utilized as the polyol in the second composition.

As used herein, isocyanates may have at least about 2 isocyanate groups, in embodiments more than 2 isocyanate groups. The isocyanate groups are reactive with reactive hydrogen groups of the other ingredients, e.g., the polyols described above. Exemplary diisocyanates for use in forming the second composition include aliphatic diisocyanates, isocyanates including aromatic groups, and combinations thereof. Suitable aliphatic diisocyanates include tetramethylene diisocyanate, cyclohexane-1,2-diisocyanate, cyclohexane-1,4-diisocyanate, hexamethylene diisocyanate, isophorone diisocyanate, methylene-bis-(p-cyclohexyl isocyanate), and/or combinations thereof. Aromatic diisocyanates include p-phenylene diisocyanate, 4,4'-diphenylmethane diisocyanate ("4,4'-MDI"), 2,4'-diphenylmethane diisocyanate ("2,4'-MDI"), 2,4-toluene diisocyanate ("2,4-TDI"), 2,6-toluene diisocyanate ("2,6-TDI"), m-tetramethylxylene diisocyanate, and/or combinations thereof.

The second composition may be prepared by mixing the polyols with the isocyanates. The materials may be mixed at a speed of from about 1000 rpm to about 5000 rpm, in embodiments, from about 1500 rpm to about 4500 rpm. The materials may be mixed for a period of time of from about 60 seconds to about 20 minutes, in embodiments from about 2 minutes to about 15 minutes, and in other embodiments from about 3 minutes to about 10 minutes. Mixing may occur at a temperature of from about 20°C to about 90°C, in embodiments, from about 30°C to about 80°C. The second composition, sometimes referred to herein as a prepolymer, produced by mixing the isocyanates and polyols may contain from about 10% to about 40% by weight NCO, in embodiments, from about 20% to about 30% by weight NCO.

Polyols may be present in the second composition of the present disclosure in amounts of from about 5% by weight to about 40% by weight of the second composition, in embodiments from about 10% by weight to about 30% by weight of the second composition, with the isocyanate present in amounts of from about 60% by weight to about 95% by weight of the second composition, in embodiments from about 70% by weight to about 90% by weight of the second composition.

### Molding the Polyurethane Foam

Methods for forming a polyurethane with the first composition and the second composition described above include blending, mixing, stirring, sonication, centrifugation, agitation, combinations thereof, and the like.

For example, in embodiments the first and second compositions described above may be mixed together to form a polyurethane. Mixing may be performer using any mixer and/or mixing vessel within the purview of those skilled in the art, depending upon parameters such as torque, rotational speed, material volume, viscosity of the composition, and the like. Mixing of the two compositions may occur at a speed of from about 1000 rpm to about 5000 rpm, in embodiments from about 1500 rpm to about 4500 rpm, for a period of time of from about 0.5 seconds (substantially instantly) to about 1 minute, in embodiments from about 1 second to about 30 seconds, and may occur at a temperature of from about about 20°C to about 90°C, in embodiments, from about 30°C to about 80°C.

After mixing is complete, the compositions may be poured into a mold. In embodiments, the mixture may be transferred to the mold within from about 0.5 seconds to about 10 seconds of completion of mixing, in other embodiments from about 1 second to about 5 seconds of completion of mixing.

Suitable molds include any mold capable of shaping, casting, or framing the polyurethane composition into an article. The mold may be fabricated from metals, plastics, or rubbers in a variety of shapes and sizes. In embodiments, the articles formed may be seals for use with minimally invasive surgical devices, including surgical portal appartii such as trocars and cannulas. The seal may include apertures or internal surfaces having an opening or channel for reception and passage of a surgical object or instrument in substantial sealed relation therewith. The tensile properties of the foam provide sufficient elasticity to bend and deform about the inserted object while conforming about the outer dimensioning of the object thereby establishing a fluid tight seal about the object. The foam may also be sufficiently compliant to absorb off axis motion of the object or instrument and may substantially minimize the formation of a gap around the object during off-set manipulation of the instrument as the presence of a gap would otherwise permit the undesired release of gases from a sealed surgical site.

The mold may then be cured by methods within the purview of those skilled in the art, including the use of radiation and/or heat. Specific examples of radiation which may be used for curing include, for example, electron beam, ultraviolet light, gamma ray, combinations thereof, and the like. Curing may also take place by heating the components to a temperature of from about 30°C to about 90°C, in embodiments, from about 40°C to about 80°C for a period of time of about 5 minutes to about 48 hours, in embodiment, from about 20 minutes to about 24 hours.

The cured polyurethane foam may then be de-molded and sterilized by washing, sonication, irradiation, or by other techniques within the purview of those skilled in the art. The resulting article is then left to dry or is dried via a jet of sterile air or the application of heat in order to obtain the final molded polyurethane foam article.

The resulting polyurethane foam may possess the first composition in an amount of from about 50% by weight to about 90% by weight of the polyurethane foam, in embodiments from about 60% by weight to about 85% by weight of the polyurethane foam. Thus the second composition may be present in an amount of from about 10% by weight to about 50% by weight of the polyurethane foam, in embodiments from about 15% by weight to about 40% by weight of the polyurethane foam.

The precise quantities of the first and second compositions, as well as the components thereof, and any other additives which may be optionally included may be varied while providing a polyurethane article which possesses ultimate elongation of at least about 300%, in embodiments, from 300% to about 1000%, in embodiments from about 350% to about 800%.

### EXAMPLE 1

A composition of the present disclosure was prepared as shown in FIGS. 1-4. The first composition was prepared as illustrated in FIGS. 1A-1C. As depicted in FIG. 1A, polyols A and B (e.g., polyether diol and a triol) and chain extender C (e.g., butane diol) were added to mixing vessel 10 and mixed with a constant torque mixer at about 3100 rpm for about 30 seconds to ensure a thorough mix. Colorant D was also added for aesthetics. As depicted in FIG. 1B, surfactant E and blowing or foaming agent F (e.g., water) was then added to vessel 10 and all materials were mixed for about 30 seconds. As depicted in FIG. 1C, catalysts G, H, I such as gelling and/or blowing and gelling catalysts (e.g., tin and amine catalysts) were then added to vessel 10 and mixed for an additional 30 seconds.

The second composition was prepared as shown in FIGS. 2A-2B. As shown in FIG. 2A, isocyanate J (e.g., MDI) was added to mixing vessel 20 followed by polyol K (e.g., polyether triol) (FIG. 2B). The components were mixed for about 5 minutes in a vortex mixer. Mixing vessel 20 was then blanketed with nitrogen and sealed.

As shown in FIG. 3, the first composition contained within mixing vessel 10 was combined with the second composition contained within mixing vessel 20. The first and second compositions were mixed for about 15 seconds at about 3100 rpm using a constant-torque mixer. Thereafter, within about 5 seconds to about 10 seconds of mixing, the combined first and second compositions were poured into mold 30 as illustrated in FIG. 4. The mold was then cured in an oven at about 80°C for about 5 minutes. The mixture reacted under the heating conditions until the mixture solidified into the polyurethane foam. The foam was then de-molded and post-cured in an over at about 60°C for about 7 hours.

Once cured, the polyurethane foam was sterilized. The foam was washed in a tumbler of distilled water, or a mixture of alcohol and distilled water, for about 5 cycles of about 30 minutes per cycle. The molded foam was then dried in a vacuum oven at about 50°C for about 15 hours.

It will be understood that various modifications may be made to the embodiments disclosed herein. Therefore, the above description should not be construed as limiting, but merely as an exemplification of preferred embodiments. Those skilled in the art will envision other modifications within the scope and spirit of the present disclosure. Such modifications and variations are intended to come within the scope of the following claims.

## Claims

1. A method comprising:
combining at least one polyol and at least one chain extender to form a first composition;
combining at least one diisocyanate and at least one polyol to form a second composition;
combining the first composition and the second composition in a mold; and
curing the first and second composition to form a polyurethane foam.

2. The method of claim 1, wherein the first composition further comprises a surfactant, a blowing agent, and at least one catalyst.

3. The method of any preceding claim, wherein the polyol in the first composition and the second composition is the same or different and is selected from the group consisting of polyethylene glycol, polypropylene glycol, polybutylene glycol, copolymers thereof, and combinations thereof.

4. The method of any preceding claim, wherein the chain extender is selected from the group consisting of diols, triols, tetraols, diamines, triamines, alkanol amines, aminoalcohols, and combinations thereof; or the method of any preceding claim, wherein the chain extender is selected from the group consisting of ethylene glycol, propylene glycol, 1,2-propane diol, 1,3-propane diol, 1,3-butane diol, 1,4-butane diol, 1,5-pentane diol, 1,6-hexanediol, diethylene glycol, triethylene glycol, dipropylene glycol, bisphenol A, hydrogenated bisphenol A, 1,4-cyclohexanediol, 1,4-bis(2-hydroxyethoxy)cyclohexane, 1,4-bis(2-hydroxyethoxy)benzene, N-methylethanolamine, N-methyliso-propylamine, 4-aminocyclohexanol, 1,2-diaminoethane, 1,3-diaminopropane, diethylenetriamine, toluene-2,4-diamine, toluene-1,6-diamine, and combinations thereof.

5. The method of any preceding claim, wherein the diisocyanate is selected from the group consisting of tetramethylene diisocyanate, cyclohexane-1,2-diisocyanate, cyclohexane-1,4-diisocyanate, hexamethylene diisocyanate, isophorone diisocyanate, p-phenylene diisocyanate, 4,4'-diphenylmethane diisocyanate, 2,4'-diphenylmethane diisocyanate, 2,4-toluene diisocyanate, 2,6-toluene diisocyanate, m-tetramethylxylene diisocyanate, and combinations thereof.

6. The method of any preceding claim, wherein the at least one polyol is present in an amount of from about 65% by weight to about 90% by weight of the first composition, and the at least one chain extender is present in an amount of from about 1.0% by weight to about 4.0% by weight of the first composition; or the method of any preceding claim, wherein the at least one diisocyanate is present in an amount of from about 70% by weight to about 90% by weight of the second composition, and the at least one polyol is present in an amount of from about 10% by weight to about 30% by weight of the second composition.

7. The method of any preceding claim, wherein the polyol comprises a copolymer of ethylene glycol and propylene glycol, the chain extender comprises 1,4-butane diol, and the isocyanate comprises methyldiphenyl diisocyanate.

8. The method of any preceding claim, wherein the first composition is present in an amount from about 60% by weight to about 85% by weight of the polyurethane foam, and wherein the second composition is present in an amount from about 15% by weight to about 40% by weight of the polyurethane foam; or the method of any preceding claim, wherein the first composition and second composition are combined by mixing at a rate of from about 1500 rpm to about 4500 rpm, for a period of time of from about 0.5 seconds to about 60 seconds, at a temperature of from about 20°C to about 80°C.

9. The method of any preceding claim, wherein the polyurethane foam has an ultimate elongation of from about 300% to about 1000%.

10. A polyurethane foam comprising:
a first composition comprising at least one polyol present in an amount of from about 65% by weight to about 90% by weight of the first composition, at least one chain extender present in an amount of from about 1.0% by weight to about 4.0% by weight of the first composition, and optionally a surfactant, a blowing agent, and a catalyst; and
a second composition comprising a diisocyanate present in an amount of from about 70% by weight to about 90% by weight of the second composition, and a polyol present in an amount of from about 10% by weight to about 30% by weight of the second composition,
wherein the polyol in the first composition and the second composition is the same or different, and wherein the polyurethane foam has an ultimate elongation of from about 300% to about 1000%.

11. The polyurethane foam of claim 10, wherein the polyol is selected from the group consisting of polyethylene glycol, polypropylene glycol, polybutylene glycol, copolymers thereof, and combinations thereof.

12. The polyurethane foam of claim 10 or claim 11, wherein the chain extender is selected from the group consisting of diols, triols, tetraols, diamines, triamines, alkanol amines, aminoalcohols, and combinations thereof; preferably wherein the chain extender is selected from the group consisting of ethylene glycol, propylene glycol, 1,2-propane diol, 1,3-propane diol, 1,3-butane diol, 1,4-butane diol, 1,5-pentane diol, 1,6-hexanediol, diethylene glycol, triethylene glycol, dipropylene glycol, bisphenol A, hydrogenated bisphenol A, 1,4-cyclohexanediol, 1,4-bis(2-hydroxyethoxy)cyclohexane, 1,4-bis(2-hydroxyethoxy)benzene, N-methylethanolamine, N-methyliso-propylamine, 4-aminocyclohexanol, 1,2-diaminoethane, 1,3-diaminopropane, diethylenetriamine, toluene-2,4-diamine, toluene-1,6-diamine, and combinations thereof.

13. The polyurethane foam of any of claims 10 to 12, wherein the diisocyanate is selected from the group consisting of tetramethylene diisocyanate, cyclohexane-1,2-diisocyanate, cyclohexane-1,4-diisocyanate, hexamethylene diisocyanate, isophorone diisocyanate, p-phenylene diisocyanate, 4,4'-diphenylmethane diisocyanate, 2,4'-diphenylmethane diisocyanate, 2,4-toluene diisocyanate, 2,6-toluene diisocyanate, m-tetramethylxylene diisocyanate, and combinations thereof.

14. The polyurethane foam of any of claims 10 to 13, wherein the first composition comprises from about 60% by weight to about 85% by weight of the polyurethane foam, and wherein the second composition comprises from about 15% by weight to about 40% by weight of the polyurethane foam.

15. The polyurethane foam of any of claims 10 to 14, wherein the polyol comprises a copolymer of ethylene glycol and propylene glycol, the chain extender comprises 1,4-butane diol, and the isocyanate comprises methyldiphenyl diisocyanate.

16. A seal comprising the polyurethane foam of any of claims 10 to 15.
